# NOUVEAU FASCICULE DE BREVET EUROPEEN

(11) **EP 3 084 301 B2**
(45) Date de publication et mention de la décision concernant l'opposition: **03.01.2024**
(45) Mention de la délivrance du brevet: 31.01.2018
(21) Numéro de dépôt: 14816253.0
(22) Date de dépôt: 19.12.2014
(51) Int. Cl.: F23J 1/00, B09B 3/00, C05F 7/00, C05F 9/00, C05B 9/00, C05B 11/10, C22B 7/02

(54) **PROCÉDÉ DE TRAITEMENT DE CENDRES ISSUES DE L'INCINÉRATION DE DÉCHETS**
VERFAHREN ZUR BEHANDLUNG DER AUS DER ABFALLVERBRENNUNG HERVORGEHENDEN ASCHEN
METHOD FOR TREATING ASH FROM THE INCINERATION OF WASTE

(30) Priorité: 20.12.2013 EP 13199070
(43) Date de publication de la demande: 26.10.2016
(73) Titulaire: Prayon, 4480 Engis (BE)
(72) Inventeur: TAKHIM, Mohamed, B-1325 Corroy-le-Grand (BE)
(74) Mandataire: Connor, Marco Tom
(86) Numéro de dépôt international: PCT/EP2014/078736
(87) Numéro de publication internationale: WO 2015/091946

(56) Documents cités:
- EP-A1- 0 586 910
- EP-A2- 0 811 580
- WO-A1-2008/115121
- WO-A1-2015/067328
- WO-A1-2015/091946
- WO-A1-2015/165481
- DE-B3-102013 018 650
- JP-A- H1 133 594
- JP-A- H1 192 122

## Description

### Domaine technique

La présente invention concerne la valorisation de cendres issues de l'incinération de déchets. En particulier, la présente invention concerne la valorisation des cendres issues de l'incinération de boues de stations d'épuration, d'os, de lisier ou d'ordures ménagères.

### Arrière plan technologique de l'invention

Compte tenu des contraintes environnementales et écologiques de plus en plus sévères, la valorisation des déchets ou des résidus quelque soit leur origine revêt un intérêt particulier. Les déchets sont généralement incinérés pour former deux types de résidus : des matériaux solides incombustibles, appelés mâchefers ou scories qui peuvent concentrer des polluants comme les métaux lourds, qui sont susceptibles d'être relâchés sous l'action de l'eau ; et des résidus d'épurations des fumées constitués des cendres de dépoussiérage et des résidus de détoxication des fumées issus du traitement des gaz. La valorisation de ces types de déchets peut être complexe suivant leur composition. Certains sont utilisés dans la construction ou dans la préparation de mélanges bitumineux.

US 5,521,132 décrit par exemple la valorisation des cendres par la production de matériaux céramiques. Les cendres sont mises en contact avec du borax et un composé calcique puis chauffé à très hautes températures, environ 1000°C, pour former des céramiques.

EP 0 743 079 décrit également le traitement de cendres issues d'un incinérateur de déchets pour stabiliser les métaux lourds contenus dans les cendres. Les cendres sont soumises à une réaction de phosphatation à haute température, entre 500°C et 1200°C pour transformer les chlorures de métaux toxiques en sel de phosphates.

On connaît également par WO 97/31874 un procédé d'inertage des cendres par réaction de celles-ci avec un mélange phosphaté pour former une pâte qui est entièrement calcinée à une température supérieure à 600°C. Le résidu obtenu est mélangé avec de l'eau et un liant hydraulique tel que du ciment.

Ces différents procédés visent principalement à enrober ou à confiner les métaux lourds présents dans les cendres dans des céramiques ou du ciment pour éviter in fine leur dispersion dans l'environnement. Ces procédés conduisent donc à une augmentation importante de la masse de déchets sans valoriser leurs constituants qui sont seulement piégés par du ciment ou des céramiques avant d'être mis en décharge dans des centres de stockage spécifiques.

Le document JP H11-92122 décrit un procédé d'extraction du phosphore depuis des matériaux contenant du phosphore tels que les cendres d'incinérations de boues. Néanmoins, le procédé met en oeuvre une digestion par acide sulfurique.

On connaît également par JP H11-33594 un procédé de traitement de boues d'épuration par une solution d'acide phosphorique à une température de 40°C. Ce procédé ne permet une purification optimale des boues d'épuration.

La présente invention cherche à palier ces inconvénients et à valoriser au moins une partie des constituants des cendres issues de l'incinération de déchets.

### Résumé de l'invention

La présente invention concerne un procédé de valorisation de cendres issues de l'incinération de déchets par voie humide. Les cendres sont principalement issues de l'incinération de boues de stations d'épuration, d'os, de lisier ou d'ordures ménagères.

La présente invention comme décrit, dans la revendication 1, fournit un procédé de traitement de cendres issues de l'incinération de déchets, de préférence issues de l'incinération de boues de stations d'épuration, d'os ou de lisier, comprenant les étapes de:
a) digestion des cendres par une liqueur d'attaque contenant des ions phosphates en solution pour former une première phase solide comprenant des impuretés et une première phase liquide comprenant des ions phosphates, ladite liqueur d'attaque contenant des ions phosphates en solution présente un pourcentage massique en ions phosphates compris entre 1 % et 85%,
b) la séparation de ladite première phase liquide comprenant des ions phosphates et de ladite première phase solide,
remarquable en ce que les cendres comprennent une teneur en phosphore dans les cendres, exprimée en pourcentage en poids de phosphates sous forme PO₄, d'au moins 7 %, et en ce que l'étape a) est effectuée pendant une durée comprise entre 5 minutes et 45 minutes et à une température comprise entre 50 et 80° C.

Ladite première phase liquide est ainsi isolée de ladite première phase solide et sa valorisation ultérieure est facilitée. Ladite première phase liquide comprend des ions phosphates issus de ladite liqueur d'attaque mais comprend également des métaux sous forme d'ions métalliques ou d'autres éléments issus des cendres. La solubilisation de ces métaux présents initialement dans les cendres facilitera leur traitement et leur recyclage ultérieur. Ainsi, le présent procédé permet de valoriser de nombreux métaux présents dans les cendres en extrayant spécifiquement au moins une partie de ceux-ci. En outre, le résidu ultime, i.e. ladite première phase solide, peut être valorisé dans les domaines de la construction. La présente invention fournit un procédé de traitement des cendres plus écologique que les procédés connus de l'art antérieur. En effet, le présent procédé consomme moins d'énergie car celui-ci ne comprend pas une étape de traitement à très haute température ou une étape de calcination. De plus, le présent procédé génère beaucoup moins de déchets puisqu'il permet d'extraire les constituants des cendres afin de les utiliser subséquemment dans des filières de recyclage spécifiques ou directement en tant que solution destinée à la vente pour des applications diverses et variées (agriculture, alimentaire, construction, stabilisation des sols ...).

L'étape a) peut être réalisée à une température comprise entre 50°C et 65°C.

Avantageusement, ladite liqueur d'attaque contenant des ions phosphates en solution présente un pourcentage massique en ions phosphates compris entre 7% et 55%, de préférence entre 7% et 50%, en particulier entre 7% et 40%, de manière privilégiée entre 13% et 28 % en poids d'ions phosphates sur base du poids total de la liqueur d'attaque. Les ions phosphates pris en considération pour la détermination du pourcentage massique en ions phosphates ci-dessus sont les ions phosphates sous la forme H₃PO₄, H₂PO₄⁻, HPO₄²⁻ et PO₄³⁻.

De préférence, ladite liqueur d'attaque contenant des ions phosphates en solution est une solution d'acide phosphorique, de préférence une solution aqueuse d'acide phosphorique. L'utilisation d'une liqueur d'attaque contenant des ions phosphates, de préférence une solution aqueuse d'acide phosphorique, permet d'améliorer le rendement d'extraction de différents éléments (notamment le phosphore, le calcium, le magnésium, l'aluminium ou le fer) présents dans les cendres et de diminuer le nombre d'étape à mettre en oeuvre dans le procédé. De préférence, la liqueur d'attaque ne contient pas d'autre acide en sus de l'acide phosphorique. En effet, la présence d'un autre acide favorisera la production d'autres sels solubles ou insolubles dans l'eau. L'élimination de ces sels, et leur séparation des sels de phosphate, nécessitera des étapes supplémentaires d'extraction liquide-liquide, de précipitation chimique ou de séparation mécanique. Ainsi, la mise en oeuvre à l'étape a) d'une solution d'acide phosphorique comme liqueur d'attaque permet d'optimiser le nombre d'étape du procédé et de rendre ce dernier plus viable économiquement.

Ladite séparation mise en oeuvre à l'étape b) peut être réalisée par filtration. Le filtrat récupéré après filtration correspond à ladite première phase liquide comprenant des ions phosphates et dépourvue des impuretés restant sous forme solide dans ladite première phase solide. Les impuretés non solubilisées par la liqueur d'attaque sont ainsi récupérées dans ladite première phase solide et peuvent être valorisées comme matière première pour la préparation de matériau de construction ou de stabilisation des sols ou tout autre application nécessitant une telle composition comprenant principalement du sable et du gypse. Le résidu présente l'avantage d'être un résidu stable, c'est-à-dire qu'il est stable dans des conditions de lixiviation et peut donc être utilisé sans impact sur l'environnement, par exemple comme amendement du sol.

### Brève description des figures

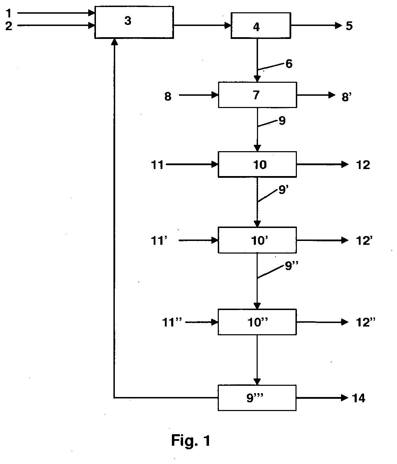

La figure 1 représente un diagramme bloc du procédé selon un mode de réalisation particulier de la présente invention.

### Description détaillée de l'invention

La présente invention se rapporte à un procédé de traitement de cendres issues de l'incinération de déchets. Comme mentionné ci-dessus les cendres peuvent être issues de l'incinération de déchets variés. L'invention est néanmoins particulièrement adaptée aux cendres issues de l'incinération de boues des stations d'épurations, d'os, de lisier ou de déchets ménagers ; de préférence aux cendres issues de l'incinération de boues des stations d'épurations, d'os ou de lisier. Les cendres peuvent comprendre des sels ou des oxydes de métaux tels que des métaux des colonnes 1 à 16 du tableau périodique des éléments y compris les terres rares, lanthanides et actinides, ainsi que des sels ou des oxydes des éléments suivants Si, P, S, As. De préférence, les métaux des colonnes 1 à 16 mentionnés ci-dessus peuvent être Na, K, Li, Rb, Mg, Ca, Sr, Ba, Sc, Y, Ti, Zr, V, Nb, Cr, Mo, Mn, Fe, Ru, Co, Rh, Ni, Pd, Cu, Ag, Zn, Cd, Al, Ge, Sn, In, Sb, Pb ou Bi. Le procédé selon la présente invention permet d'extraire tout ou partie de ces différents métaux ou éléments sous forme de sels de phosphates solubles dans l'eau. Ces sels peuvent être ensuite séparés et valorisés indépendamment les uns des autres. Grâce au procédé selon la présente invention, même ladite première phase solide récupérée à l'étape b) peut être valorisée et servir de matière première pour d'autres applications. Ainsi, les cendres traitées par le présent procédé ne sont plus stockées mais valorisées pour préserver l'environnement et diminuer les quantités de déchets stockés ou mis en décharge.

Le présent procédé comprend les étapes suivantes :
a) digestion des cendres par une liqueur d'attaque contenant des ions phosphates en solution pour former une première phase solide comprenant des impuretés et une première phase liquide comprenant des ions phosphates, ladite liqueur d'attaque contenant des ions phosphates en solution présente un pourcentage massique en ions phosphates compris entre 1 % et 85%,
b) la séparation de ladite première phase liquide comprenant des ions phosphates et de ladite première phase solide,
remarquable en ce que les cendres comprennent une teneur en phosphore dans les cendres, exprimée en pourcentage en poids de phosphates sous forme PO₄, d'au moins 7 %, et en ce que l'étape a) est effectuée pendant une durée comprise entre 5 minutes et 45 minutes et à une température comprise entre 50 et 80° C.

Après séparation, ladite première phase liquide comprenant des ions phosphates peut être récupérée et/ou être isolée. La première phase liquide peut comprendre, outre des ions phosphates, des ions métalliques provenant des sels ou des oxydes de métaux tels que des métaux des colonnes 1 à 16 du tableau périodique des éléments, y compris terres rares, lanthanides et actinides, ou des ions issus des éléments suivants Si, P, S, As. Les ions métalliques peuvent être des ions issus des métaux suivants : Na, K, Li, Rb, Mg, Ca, Sr, Ba, Sc, Y, Ti, Zr, V, Nb, Cr, Mo, Mn, Fe, Ru, Co, Rh, Ni, Pd, Cu, Ag, Zn, Cd, Al, Ge, Sn, In, Sb, Pb ou Bi. En particulier, le présent procédé peut permettre d'extraire et ainsi de valoriser tout ou partie de l'aluminium, du calcium, du magnésium, du fer, du sodium, du potassium, du zinc, des terres rares, du cuivre, du mercure, du plomb, du phosphore ou de l'un quelconque des métaux cités ci-dessus et contenu dans les cendres si celles-ci en contiennent.

Ladite liqueur d'attaque contenant des ions phosphates en solution peut présenter un pourcentage massique en ions phosphates compris entre 7% et 55%, de préférence entre 7% et 50%, en particulier entre 7% et 40%, de manière privilégiée entre 13% et 28 % en poids d'ions phosphates sur base du poids total de la liqueur d'attaque. De manière surprenante, le présent procédé présente de bon rendement d'extraction (supérieur à 80%) d'un ou plusieurs constituants des cendres, par exemple le phosphore, l'aluminium, le calcium, le magnésium ou le fer, lorsqu'une liqueur d'attaque contenant des ions phosphates en solution présente un pourcentage massique en ions phosphates compris entre 7% et 50%, en particulier entre 7% et 40%, de manière privilégiée entre 13% et 28 % en poids d'ions phosphates sur base du poids total de la liqueur d'attaque.

De préférence, la liqueur d'attaque contenant des ions phosphates en solution est une solution, de préférence aqueuse, d'acide phosphorique. Ladite solution d'acide phosphorique utilisée peut être diluée, de préférence dans l'eau, pour obtenir une liqueur d'attaque ayant un pourcentage massique en ions phosphates compris entre 1% et 85%, avantageusement entre 7% et 55%, de préférence entre 7% et 50%, en particulier entre 7% et 40%, de manière privilégiée entre 13% et 28 % en poids d'ions phosphates sur base du poids total de la liqueur d'attaque. La dilution de la solution d'acide phosphorique peut être effectuée préalablement, simultanément ou postérieurement à sa mise en contact avec lesdites cendres traitées à l'étape a). Ainsi, une solution d'acide phosphorique (par exemple 85% en poids H₃PO₄) peut être mise en contact avec les cendres puis une quantité d'eau suffisante est ajoutée pour obtenir une liqueur d'attaque ayant un pourcentage massique en ions phosphate tel que mentionné ci-dessus. Alternativement, une solution d'acide phosphorique (par exemple 85% en poids H₃PO₄) peut être mise en contact avec les cendres simultanément à la quantité d'eau nécessaire à l'obtention d'une liqueur d'attaque ayant un pourcentage massique en ions phosphate tel que mentionné ci-dessus. Alternativement, une solution d'acide phosphorique (par exemple 85% en poids H₃PO₄) peut être diluée avec de l'eau pour obtenir une liqueur d'attaque ayant un pourcentage massique en ions phosphate tel que mentionné ci-dessus, ladite liqueur d'attaque étant ensuite ajoutée sur les cendres pour mettre en oeuvre l'étape a) du présent procédé.

De préférence, la liqueur d'attaque contenant des ions phosphates en solution comprend au moins 50% en poids d'acide phosphorique, avantageusement au moins 75% en poids d'acide phosphorique, de préférence au moins 90% en poids d'acide phosphorique, en particulier au moins 98,5% en poids d'acide phosphorique, plus particulièrement au moins 99% en poids d'acide phosphorique.

De préférence, le rapport en poids entre ladite liqueur d'attaque contenant des ions phosphates en solution et les cendres peut être supérieur ou égale à 2, avantageusement supérieur à 4, de préférence supérieur à 5, en particulier supérieur 5,5. Le rapport en poids entre ladite liqueur d'attaque contenant des ions phosphates en solution et les cendres peut également être compris entre 2 et 100, avantageusement entre 4 et 50, de préférence entre 5 et 50, en particulier entre 5 et 25. Le poids des cendres à considérer est le poids des cendres avant digestion, c'est-à-dire avant la mise en contact avec la liqueur d'attaque. Ceci présente l'avantage de former à l'étape a) un milieu réactionnel faiblement visqueux dont lequel les cendres ou les résidus issus de la digestion sont en suspension. Lorsque la liqueur d'attaque est une solution d'acide phosphorique, le poids de la liqueur d'attaque est déterminé à partir du poids de la solution d'acide phosphorique mise en oeuvre à l'étape a), et optionnellement du poids de l'eau ajouté si la solution d'acide phosphorique est diluée. Ainsi, la prise en masse ou la formation d'une pâte visqueuse et difficilement exploitable est évitée. La séparation effectuée à l'étape b) est ainsi facilitée.

De préférence, avant la mise en oeuvre de l'étape b), le rapport en poids entre ladite première phase liquide comprenant des ions phosphates et les cendres est supérieur ou égale à 2, avantageusement supérieur à 4, de préférence supérieur à 5, en particulier supérieur 5,5. Le rapport en poids entre ladite première phase liquide et les cendres peut également être compris entre 2 et 100, avantageusement entre 4 et 50, de préférence entre 5 et 25. Le poids des cendres à considérer est le poids des cendres avant digestion, c'est-à-dire avant la mise en contact avec la liqueur d'attaque. Ainsi, la liqueur d'attaque et les cendres peuvent former intermédiairement une pâte ou un brouet, mais une quantité d'eau suffisante est ajoutée avant la mise en oeuvre de l'étape b) du présent procédé pour obtenir le rapport en poids entre ladite première phase liquide et les cendres mentionné ci-dessus. La séparation effectuée à l'étape b) est ainsi facilitée et la valorisation des cendres améliorée.

L'étape a) du présent procédé peut être réalisée à une température comprise entre 50°C et 65°C. La mise en oeuvre de la digestion des cendres entre 50°C et 80°C permet de contrôler la viscosité du milieu réactionnel et d'éviter les problèmes de processing liés à la lixiviation des cendres, et principalement la prise en masse du milieu réactionnel.

L'étape b) du présent procédé peut être effectuée à une température comprise entre 20°C et 95°C, avantageusement entre 20°C et 80°C. L'étape b) du présent procédé peut être effectuée à une température supérieure à 40°C, de préférence entre 50°C et 80°C, en particulier entre 50°C et 65°C. La mise en oeuvre de l'étape b) du présent procédé à une température comprise entre 50°C et 80°C permet également de favoriser la qualité de la séparation des phases et d'améliorer le rendement global du procédé.

La digestion des cendres par la liqueur d'attaque contenant des ions phosphates en solution est effectuée pendant une durée entre 5 minutes et 45 minutes, plus particulièrement entre 30 minutes et 45 minutes. De bons rendements d'extraction, par exemple > 90% pour le phosphore, sont observés même lorsque la durée de l'étape de digestion est comprise entre 5 minutes et 45 minutes. Ceci permet d'améliorer la viabilité économique et industrielle du présent procédé.

Avantageusement, le présent procédé s'applique au traitement de cendres issues de l'incinération de boues des stations d'épurations, d'os ou de lisier. Les cendres traitées par le présent procédé comprennent une teneur en phosphore, exprimée en pourcentage en poids de phosphates PO₄ dans les cendres, d'au moins 7%, de préférence entre 7% et 67,5%, en particulier entre 7% et 47%, plus particulièrement entre 20% et 47%. Des teneurs en phosphore dans les cendres d'au moins 7% en poids de phosphates, de préférence entre 7% et 67,5%, en particulier entre 7% et 47%, plus particulièrement entre 20% et 47%, peuvent être particulièrement présentes dans les cendres issues de l'incinération de boues de stations d'épuration, d'os ou de lisier.

De préférence, lorsque les cendres comprennent du phosphore, la masse absolue en phosphore, exprimée en g de PO₄, dans ladite première phase liquide comprenant des ions phosphates obtenue à l'étape b) est supérieure à la masse absolue en phosphore, exprimée en g de PO₄, dans ladite liqueur d'attaque contenant des ions phosphates en solution mise en oeuvre initialement à l'étape a) du présent procédé pour digérer les cendres. Ainsi, le phosphore contenu dans les cendres est extrait et solubilisé par la liqueur d'attaque permettant l'enrichissement de ladite première phase liquide en phosphate. De préférence, lorsque la liqueur d'attaque est une solution d'acide phosphorique, ladite première phase liquide obtenue à l'étape b) est une solution d'acide phosphorique enrichi en phosphate.

Le présent procédé présente un bon rendement d'extraction d'au moins une partie des métaux contenus dans les cendres, principalement sous la forme de sels de phosphates solubles dans l'eau. Par exemple, au moins 80%, avantageusement au moins 90%, de préférence au moins 95%, du calcium ou du magnésium présent dans les cendres est digéré à l'étape a) et récupéré dans ladite première phase liquide comprenant des ions phosphates obtenue à l'étape b). Des valeurs similaires sont également obtenues pour l'aluminium ou le fer ou d'autres métaux présents dans les cendres. En particulier, le présent procédé présente un bon rendement d'extraction du phosphore contenu dans les cendres, lorsque ces dernières en contiennent. Au moins 85% du phosphore présent dans les cendres est digéré à l'étape a) et récupéré dans ladite première phase liquide sous forme d'ions phosphates, avantageusement au moins 90%, de préférence au moins 95%, en particulier au moins 98%.

Ladite première phase liquide comprenant des ions phosphates et obtenue à l'étape b) peut être récupérée et peut former une solution d'acide phosphorique. Ladite première phase liquide peut être utilisée comme matière première pour la production d'engrais. Cette dernière peut comprendre en outre des sels de phosphates métalliques, tels que du phosphate d'aluminium, du phosphate de calcium, du phosphate de fer ou du phosphate de magnésium. Cette solution d'acide phosphorique obtenue à l'étape b) peut être utilisée en tant que tel. Suivant la composition des cendres, ladite première phase liquide peut également comprendre des sels de sulfates tels que du sulfate d'aluminium, du sulfate de calcium, du sulfate de fer ou du sulfate de magnésium.

Selon un mode de réalisation préféré, l'étape a) du présent procédé peut être réalisée dans un premier réacteur à co-courant comprenant un ou plusieurs compartiments, avantageusement entre 2 et 12 compartiments, de préférence entre 2 et 5 compartiments, en particulier entre 3 et 5 compartiments. Les compartiments sont disposés en série et communiquent entre eux par le bas de ceux-ci. Les cendres et la liqueur d'attaque contenant des ions phosphates peuvent par exemple être introduites dans un premier compartiment. La boue ainsi formée passe alors dans chacun des autres compartiments qui peuvent être ainsi utilisés pour moduler ou contrôler le temps de réaction, et optimiser le mélange des composés. Le dernier compartiment dudit premier réacteur à co-courant de l'étape a) est connecté à un moyen de séparation entre la première phase liquide et la première phase solide issue de l'étape. De préférence, la séparation entre la première phase liquide et la première phase solide est effectuée par filtration. Ainsi, le dernier compartiment dudit premier réacteur à co-courant de l'étape a) est connecté à un filtre par l'intermédiaire d'un conduit permettant le convoyage du mélange réactionnel obtenu à la fin de l'étape a) vers le filtre où l'étape b) du présent procédé sera réalisée. Optionnellement, une cuve de stockage tampon peut être placée entre le dernier compartiment du premier réacteur à co-courant utilisé pour la mise en oeuvre de l'étape a) et le filtre utilisé pour la mise en oeuvre de l'étape b). Dans ce cas, le mélange réactionnel obtenu à la fin de l'étape a) est transféré de la cuve tampon vers le filtre de l'étape b).

Le présent procédé peut également comprendre une étape c) de purification de ladite première phase liquide comprenant des ions phosphates obtenue à l'étape b) pour former une seconde phase liquide comprenant des ions phosphates. La purification de ladite première phase liquide comprenant des ions phosphates permet de diminuer notamment la teneur en un ou plusieurs ions métalliques présents dans ladite première phase liquide et mentionnés ci-dessus, c'est-à-dire les ions métalliques issus des métaux des colonnes 1 à 16 du tableau périodique, de préférence Na, K, Li, Rb, Mg, Ca, Sr, Ba, Sc, Y, Ti, Zr, V, Nb, Cr, Mo, Mn, Fe, Ru, Co, Rh, Ni, Pd, Cu, Ag, Zn, Cd, Al, Ge, Sn, In, Sb, Pb ou Bi ou des ions issus des éléments suivants Si, S, As; en particulier, Ca, Mg, Fe, Al. La purification peut également permettre de séparer les différents ions métalliques présents dans ladite première phase liquide pour valoriser ceux-ci indépendamment les uns des autres. Selon un mode de réalisation particulier, ladite seconde phase liquide peut donc être une solution d'acide phosphorique purifiée, c'est-à-dire dont les teneurs en différents ions métalliques tels que calcium, magnésium, aluminium, fer ou d'autres ions métalliques peut être diminuée par rapport aux teneurs en ces ions dans ladite première phase liquide, cette dernière pouvant également être selon un mode de réalisation particulier une solution d'acide phosphorique.

L'étape c) de purification peut être une purification par extraction liquide-liquide. Ainsi, l'étape c) de ladite première phase liquide comprenant des ions phosphates inclut :
(i) extraction des ions phosphates contenus dans ladite première phase liquide avec un solvant organique, pour former une phase d'extraction organique contenant des ions phosphates et une phase d'extraction aqueuse contenant des impuretés ;
(ii) réextraction de ladite phase d'extraction organique, par un agent de réextraction aqueux pour former une phase de réextraction aqueuse et une phase organique pauvre en ions phosphates ;
(iii) séparation de la phase de réextraction aqueuse contenant des ions phosphates et la phase organique, ladite phase de réextraction aqueuse contenant des ions phosphates étant ladite seconde phase liquide.

Le solvant organique est de préférence choisi dans le groupe consistant en méthylisobutylcétone, butanol, pentanol, solvants organiques en C₄ à C₇, et mélanges de ceux-ci. L'étape de purification peut comporter en outre, de préférence avant l'extraction ou la réextraction de la phase d'extraction organique contenant des ions phosphates, les étapes consistant à :
- laver ladite phase d'extraction organique contenant des ions phosphates avec une solution aqueuse pour obtenir une phase organique lavée contenant des ions phosphates et une phase aqueuse contenant des impuretés et une certaine quantité d'ions phosphates;
- séparer la phase organique lavée obtenue contenant des ions phosphates.

Cette phase organique convient pour ladite réextraction. La purification par extraction liquide-liquide peut comporter en outre un entraînement à la vapeur des traces d'agent d'extraction organique de ladite seconde phase liquide. L'étape c) de purification par extraction liquide-liquide peut également comprendre l'addition d'un acide fort à ladite première phase liquide comprenant des ions phosphates obtenue à l'étape b) avant l'étape (i) mentionnée ci-dessus. Ceci permet d'augmenter le rendement d'extraction.

Alternativement, la purification de ladite première phase liquide réalisée à l'étape c) comprend l'application d'un échange d'ions pour produire ladite seconde phase liquide. Par rapport à une extraction liquide-liquide, la purification par l'application d'un échange d'ions permet d'obtenir un meilleur rendement en ions phosphates dans ladite seconde phase liquide. L'application d'un échange d'ions peut être effectuée par l'intermédiaire d'une ou plusieurs résines échangeuses d'ions, avantageusement de cations ou d'anions ou un mélange, de préférence de cations. De préférence, les résines échangeuses d'ions comprennent des groupements fonctionnels acides. En particulier, les groupements fonctionnels acides contenus dans les résines échangeuses d'ions ont un pKa inférieur au pKa du couple acido-basique dont la base conjuguée est formée par les ions phosphates obtenus à l'étape b). Avantageusement, les résines échangeuses d'ions, de préférence de cations, comprennent des groupements fonctionnels acides ayant un pKa inférieur au pKa du couple H₃PO₄/H₂PO₄⁻. L'application d'un échange d'ions peut comprendre l'application d'une résine échangeuse d'anions pour récupérer les oxydes d'arsenic éventuellement générés lors de la mise en oeuvre du présent procédé.

Lesdites une ou plusieurs résines échangeuses de cations, peuvent être régénérées indépendamment les unes des autres par une solution d'acide, avantageusement d'acide chlorhydrique, d'acide nitrique ou d'acide sulfurique. Ledit acide peut être un acide fort. La régénération des résines échangeuses d'ions produit une solution aqueuse comprenant des sels de métaux piégés par les résines. Ces sels peuvent être des sels de chlorure, de nitrate ou de sulfate. De préférence, lesdites une ou plusieurs résines échangeuses de cations, peuvent être régénérées indépendamment les unes des autres par une solution d'acide chlorhydrique ou une solution d'acide sulfurique ou un mélange de celles-ci. Une solution aqueuse comprenant un ou plusieurs sels de chlorure ou un ou plusieurs sels de sulfate ou un mélange de ceux-ci peut être formée. Les sels peuvent être des sels de chlorure de métaux sélectionné parmi les métaux des colonnes 1 à 16 du tableau périodique (métaux et métaux de transition, terres rares, As) ou des sels de sulfate de métaux sélectionné parmi les métaux des colonnes 1 à 16 du tableau périodique (métaux et métaux de transition, terres rares, As).

De manière générale, les cendres utilisées dans le présent procédé comprennent principalement du calcium, magnésium, aluminium, fer, du silicium ou du phosphore dans des teneurs variant en fonction de l'origine des cendres. Le silicium est principalement récupéré dans ladite première phase solide. De préférence, le phosphore est récupéré dans ladite première phase liquide ou ladite seconde phase liquide sous forme d'acide phosphorique. Lorsque lesdites une ou plusieurs résines échangeuses de cations sont régénérées indépendamment les unes des autres par une solution d'acide chlorhydrique, une solution aqueuse comprenant du chlorure de calcium, du chlorure de magnésium, du chlorure d'aluminium ou du chlorure de fer, ou leurs mélanges, est formée pour chacune des résines échangeuses de cations. Ces solutions aqueuses peuvent être récupérées et isolées pour ensuite être valorisées dans différents domaines techniques tels que par exemple la construction et le traitement des eaux usées dans les stations d'épuration. Ces solutions aqueuses peuvent également être séchées, concentrées pour obtenir un produit commercial. Les sels peuvent également être précipités selon des procédés connus de l'homme du métier. Le présent procédé s'applique également pour récupérer tout ou partie des autres métaux présents dans les cendres. Ceci est possible en multipliant le nombre de résines échangeuses d'ions. Ainsi, des solutions aqueuses comprenant des sels de métaux, tels que Na, K, Li, Rb, Mg, Ca, Sr, Ba, Sc, Y, Ti, Zr, V, Nb, Cr, Mo, Mn, Fe, Ru, Co, Rh, Ni, Pd, Cu, Ag, Zn, Cd, Al, Ge, Sn, In, Sb, Pb ou Bi, peuvent être obtenues lors de la régénération desdites résines échangeuses d'ions. Le présent procédé permet donc d'extraire tout ou partie des différents métaux contenus dans les cendres et de les récupérer, de préférence sous forme de solutions de sels de chlorure. Alternativement, si lesdites résines échangeuses d'ions sont régénérées par une solution d'acide sulfurique ou nitrique, des solutions aqueuses de sels de nitrate ou de sulfate sont obtenues au lieu de solutions aqueuses de sels de chlorure.

Le présent procédé permet ainsi de valoriser les cendres telles que décrites dans la présente invention en extrayant notamment tout ou partie de l'aluminium, du calcium, du magnésium, du fer ou du phosphore présent dans celles-ci. Suivant la composition initiale des cendres, d'autres métaux peuvent être extraits et récupérés. De préférence, le phosphore est récupéré sous la forme d'une solution aqueuse d'acide phosphorique. Comme mentionné ci-dessus, tout ou partie de l'aluminium, du calcium, du magnésium ou du fer peut être récupéré sous la forme d'une solution aqueuse de chlorure de calcium, d'aluminium, de magnésium ou de fer.

Le présent procédé peut également comprendre une étape de concentration de ladite première phase liquide comprenant des ions phosphates ou de ladite seconde phase liquide comprenant des ions phosphates.

Le présent procédé peut également comprendre en outre une étape de traitement au charbon actif de ladite première phase liquide comprenant des ions phosphates obtenue à l'étape b) ou de ladite seconde phase liquide comprenant des ions phosphates obtenue à l'étape c). Ce traitement permet d'éliminer tout ou partie de la dioxine ou du mercure éventuellement présent dans ladite première phase liquide comprenant des ions phosphates obtenue à l'étape b) ou de ladite seconde phase liquide comprenant des ions phosphates obtenue à l'étape c).

Selon un mode de réalisation particulier de l'invention, ladite seconde phase liquide comprenant des ions phosphates obtenue à l'étape c) est une solution d'acide phosphorique. Celle-ci peut être obtenue en utilisant à l'étape a) une solution d'acide phosphorique en tant que liqueur d'attaque comprenant des ions phosphates en solution.

Selon un mode de réalisation préféré une partie de ladite première phase liquide ou de ladite seconde phase liquide comprenant des ions phosphates est recyclée pour être utilisée à l'étape a) en tant que liqueur d'attaque contenant des ions phosphates en solution. Le procédé peut donc être réalisé en continu.

Selon un mode de réalisation particulier de l'invention, la liqueur d'attaque est une solution d'acide phosphorique et le présent procédé peut comprendre :
a) la digestion de cendres comprenant une teneur en phosphore, exprimée en pourcentage en poids de PO₄ dans les cendres, d'au moins 1% par une première solution d'acide phosphorique pour former une première phase solide comprenant des impuretés et une première phase liquide comprenant des ions phosphates, le rapport en poids entre ladite première solution d'acide phosphorique et les cendres est supérieur ou égale à 2, avantageusement supérieur à 4, de préférence supérieur à 5,
b) la séparation de ladite première phase liquide comprenant des ions phosphates de ladite première phase solide,
b') optionnellement traitement de première phase liquide comprenant des ions phosphates par du charbon actif,
c) purification de ladite première phase liquide comprenant des ions phosphates, de préférence, par application d'un échange d'ions ou par extraction liquide-liquide pour obtenir une deuxième solution d'acide phosphorique,
c') optionnellement traitement de ladite solution d'acide phosphorique par du charbon actif. Le poids de ladite première solution d'acide phosphorique est déterminé par le poids de la solution d'acide phosphorique et le poids en eau ajouté si ladite première solution d'acide phosphorique est diluée avant, pendant ou après la mise en contact avec les cendres. La digestion est réalisée à une température comprise entre 50°C et 80°C, en particulier entre 50°C et 65°C, avantageusement pendant une durée comprise entre 15 minutes et 45 minutes, de manière privilégiée entre 30 et 45 minutes. De préférence la première solution d'acide phosphorique présente un pourcentage massique en ions phosphates compris entre 7% et 50%, en particulier entre 7% et 40%, de manière privilégiée entre 13% et 28 % en poids d'ions phosphates sur base du poids total de la première solution d'acide phosphorique. Les ions phosphates pris en considération pour la détermination du pourcentage massique en ions phosphates ci-dessus sont les ions phosphates sous la forme H₃PO₄, H₂PO₄⁻, HPO₄²⁻ et PO₄³⁻.

Selon un autre aspect de l'invention, lorsque les cendres contiennent du phosphore, celles-ci peuvent être utilisées pour augmenter la masse absolue en phosphate d'une solution aqueuse d'acide phosphorique. En effet, en appliquant le présent procédé dans lequel la liqueur d'attaque contenant des ions phosphates en solution est une solution d'acide phosphorique, ladite première phase liquide comprenant des ions phosphates ou ladite seconde phase liquide comprenant des ions phosphates obtenue est une solution d'acide phosphorique dans laquelle la masse absolue en phosphate (en g de PO₄) a été augmentée par rapport à la masse absolue en phosphate dans la liqueur d'attaque (en g de PO₄).

Le présent procédé peut s'appliquer à des cendres contenant principalement de l'aluminium, du fer, du calcium ou du magnésium ou leurs mélanges, et peu de phosphore (moins de 1% en poids de PO₄). Dans ce cas ladite première phase liquide comprendra des sels de phosphate d'aluminium, de calcium, de fer ou de magnésium ou leurs mélanges. La mise en oeuvre de l'étape c) de purification, par exemple par l'application d'échanges d'ions ou par extraction liquide-liquide, permettra de récupérer une seconde phase liquide comprenant des ions phosphates en solution, e.g. une solution d'acide phosphorique si la liqueur d'attaque utilisée de l'étape a) était une solution d'acide phosphorique. En outre, la régénération des résines échangeuses d'ions permettra de récupérer principalement des solutions aqueuses de sel d'aluminium, de calcium, de magnésium ou de fer ou leurs mélanges et éventuellement d'autres solutions aqueuses de sels métalliques issus des métaux éventuellement présents dans les cendres tels que Na, K, Li, Rb, Sr, Ba, Sc, Y, Ti, Zr, V, Nb, Cr, Mo, Mn, Ru, Co, Rh, Ni, Pd, Cu, Ag, Zn, Cd, Ge, Sn, In, Sb, Pb ou Bi.

La figure 1 représente un diagramme bloc du procédé selon un mode de réalisation particulier de la présente invention. Le réacteur de digestion 3 est alimenté par les cendres 1 et une solution d'acide phosphorique 2. Après digestion des cendres 1 dans les conditions du présent procédé, le milieu réactionnel est soumis à une filtration sur un filtre presse 4 pour séparer la première phase solide 5 de la première phase liquide 6 comprenant des ions phosphates en solution. La première phase liquide est traitée en 7 avec du charbon actif 8. Le résidu solide issu de ce traitement est évacué en 8' et la phase liquide 9 issu de ce traitement est traité par 3 résines échangeuses de cations, 10, 10' et 10", placées en série. Le nombre de résines échangeuse de cations est limitée à 3 dans cet exemple dans un souci de clarté et de concision, mais en pratique au niveau industriel, le nombre de résines échangeuses de cations pourra être plus élevé, par exemple entre 20 et 100 résines échangeuse de cations en fonction du degré de pureté de ladite seconde phase liquide et du nombre de métaux à récupérer. Les phases liquides 9', 9" et 9"' correspondent aux phases liquides en sortie de la résine échangeuse de cations correspondante. Les phases liquides 9', 9" et 9"' sont des solutions d'acide phosphorique dont la pureté est améliorée au fur et à mesure des passages dans les résines échangeuses de cations. Tout ou partie de la solution d'acide phosphorique obtenue en 9"' peut être récupérée ou stockée en 14 ou recyclée pour alimenter le réacteur de digestion 3. Les résines échangeuses d'ions 10, 10', 10" sont régénérées indépendamment les unes des autres par une solution d'acide chlorhydrique 11, 11' ou 11". La solution aqueuse 12 récupérée suite à la régénération de la résine échangeuse 10 comprend principalement du chlorure de calcium ou du chlorure de magnésium ou un mélange des deux. Les solutions aqueuses 12' et 12" récupérées suite à la régénération de la résine échangeuse 10' et 10" comprennent principalement du chlorure d'aluminium ou du chlorure de fer ou un mélange des deux.

### Procédure pour déterminer les teneurs en métaux

Les teneurs en métaux dans un échantillon sont déterminés par spectrométrie d'émission optique (ICP-OES : Inductively coupled plasma optical émission spectrometry) utilisant un spectromètre Agilent 710 Axial série ICP optical émission spectrometer équipé d'un nébulisateur (One Neb insert concentric ICP) et d'une torche à plasma (lo-flw, Quartz, inlet tbg, axial). Les échantillons et les standards sont préparés dans des récipients préalablement nettoyés par une solution diluée d'acide nitrique (193 g d'acide nitrique à 96%, diluée jusqu'à 1000 mL avec de l'eau distillée). L'appareillage est calibré par le protocole suivant en utilisant des solutions standard de Pb(NO₃)₂ avec une concentration en plomb de 100 mg/L, de Cd(NO₃)₂ avec une concentration en cadmium de 100 mg/L, de Hg(NO₃)₂ avec une concentration en mercure de 100 mg/L, de H₃AsO₄ avec une concentration en arsenic de 100 mg/L, et de Y(NO₃)₃ avec une concentration en yttrium de 100 mg/L. A partir de chacune des solutions de Pb(NO₃)₂, Cd(NO₃)₂, Hg(NO₃)₂ et H₃AsO₄ une série de 7 échantillons de calibration à 0,01 ppm, 0,05 ppm, 0,1 ppm, 0,5 ppm, 1 ppm et 5 ppm sont préparées. Dans chaque échantillon, 200 µL de la solution standard de Y(NO₃)₃ est ajouté puis chaque échantillon est dilué avec la solution diluée d'acide nitrique ci-dessus pour atteindre un volume de 100 mL. Les échantillons à analyser par ICP-OES sont préparés en mélangeant dans une fiole de 100 mL contenant 50 mL de la solution diluée d'acide nitrique telle que préparée ci-dessus, 10 g de l'échantillon à analyser puis 200 µL de la solution standard de Y(NO₃)₃. Le volume est ensuite ajusté à 100 mL par l'addition de la solution diluée d'acide nitrique. La solution ainsi obtenue est agitée vigoureusement.

### Exemple 1

On prépare une liqueur d'attaque comprenant une solution d'acide phosphorique à 20,7% en poids d'ions phosphates à partir de 481,1 g d'une solution d'acide phosphorique à 85% en poids de H₃PO₄ et de 1510,1 g d'eau. Dans un réacteur de digestion, 100 g de cendres issues de l'incinération de boues de stations d'épuration sont mis en contact avec la solution d'acide phosphorique à 20,7% en poids d'ions phosphates telle que préparée ci-dessus. Les cendres comprennent 36,2 % de phosphore (exprimé en pourcentage % en poids sous forme de PO₄). La digestion des cendres est effectuée pendant 30 minutes à 60°C. Le mélange réactionnel est filtré sur un filtre presse. Le filtrat est purifié par l'application de 6 résines échangeuses de cations (Lewatit^{®} S2568H - Lanxess) disposées en série. La solution aqueuse d'acide phosphorique récupérée en sortie de la sixième résine échangeuse de cations comprend 98 % du phosphate présent initialement dans le réacteur de digestion, c'est-à-dire du phosphate présent initialement dans les cendres et dans la liqueur d'attaque. Cette solution d'acide phosphorique est concentrée pour obtenir une solution à 54 % en poids de P₂O₅. L'application des résines échangeuses de cations permet du purifier la solution d'acide phosphorique. Le tableau 1 ci-dessus reprend les teneurs en différents métaux contenus dans la solution d'acide phosphorique avant purification et en sortie de chacune des résines échangeuses d'ions.

**Tableau 1 - Teneur en métaux (ppm) dans la solution d'acide phosphorique**

| Métaux | Cendres | Avant purification | 1^{ère} colonne | 2^{ème} colonne | 3^{ème} colonne | 4^{ème} colonne | 5^{ème} colonne | 6^{ème} colonne |
|---|---|---|---|---|---|---|---|---|
| Al | 39000 | 1101 | 915 | 426 | 152 | 73 | n.d. | 41 |
| As | 32 | 1.6 | 1.56 | 1.73 | 1.67 | 1.75 | 1.64 | 1.78 |
| Ca | 78000 | 4048 | 275 | 39 | < | < | < | < |
| Cd | 2 | 0.5 | < | < | < | < | < | < |
| Cr | 90 | 4.2 | 3.74 | 3.81 | 3.23 | 2.96 | 2.53 | 2.5 |
| Fe | 110000 | 2144 | 1942 | 1758 | 1588 | 1475 | 1143 | 1009 |
| K | 13200 | 897 | 92 | 43 | 10 | 2 | n.d. | n.d. |
| Mg | 14100 | 1012 | 193 | 8 | 1 | < | < | < |
| Mn | 1456 | 73 | 15 | 1 | 0.1 | < | < | < |
| Mo | 17 | 1.4 | 1.35 | 1.5 | 1.43 | 1.48 | 1.49 | 1.61 |
| Na | 3600 | 229 | 45 | < | < | < | < | < |
| Ni | 126 | 4.9 | 0.6 | < | < | < | < | < |
| Pb | 169 | 12 | 1 | 0.35 | < | < | < | < |
| Sr | 454 | 29 | 1.45 | 0.12 | < | < | < | < |
| Zn | 1598 | 100 | 14.5 | 0.1 | < | < | < | < |
| Si | 140000 | <250 | n.d. | n.d. | n.d. | n.d. | n.d. | n.d. |

| | | | | | | | | |
|---|---|---|---|---|---|---|---|---|
| * *le signe «* < *» indique que la teneur est inférieure à la limite de détection* | | | | | | | | |

L'application des résines échangeuses d'ions, de préférence de cations permet d'éliminer une partie des métaux présents dans la solution d'acide phosphorique obtenue après l'étape b) du présent procédé. Les teneurs en magnésium, calcium, aluminium ou fer sont nettement diminuées. Les différentes colonnes ont été régénérées indépendamment les unes des autres par une solution d'acide chlorhydrique à 5%. Les solutions aqueuses récupérées après la régénération des colonnes 1 et 2 comprennent du chlorure de magnésium, du chlorure de calcium, du chlorure de fer et du chlorure d'aluminium. Les solutions aqueuses récupérées après la régénération des colonnes 3 à 6 comprennent principalement du chlorure de fer et du chlorure d'aluminium.

### Exemple 2

L'exemple 1 a été reproduit en utilisant des solutions d'acide phosphorique de concentration différentes pour mettre en oeuvre la digestion des cendres. Quatre solutions d'acide phosphorique respectivement à 9,9% en poids d'ions phosphates, 13,8% en poids d'ions phosphates, 27,6% en poids d'ions phosphates, et 34,5% en poids d'ions phosphates ont été préparées à partir d'une solution d'acide phosphorique à 85% en poids de H₃PO₄.

**Tableau 2 - résultats de la digestion de cendres par des solutions d'acide phosphorique à différentes concentrations**

| Exemple | Cendres (g) | % massique en ions phosphates dans la liqueur d'attaque | % massique en ions phosphates dans le filtrat | Rendement (%) |
|---|---|---|---|---|
| 2A | 100 | 9,9 | 11,1 | 90 |
| 2B | 100 | 13,8 | 15,4 | 95,5 |
| 2C | 100 | 20,7 | 22,2 | 98 |
| 2D | 100 | 27,6 | 29,0 | 99 |
| 2E | 100 | 34,5 | 36,6 | 98 |

Comme le montre les résultats repris dans le tableau 2, la teneur en phosphate dans la solution obtenue après filtration (après l'étape b) du présent procédé) est supérieure à la teneur en phosphate de la liqueur d'attaque. Le phosphore présent dans les cendres a été extrait et valorisé sous forme d'une solution d'acide phosphorique. Le rendement, mentionné dans le tableau 2, correspond à la quantité de phosphate récupéré dans le filtrat de l'étape b) du présent procédé par rapport à la quantité de phosphate présent initialement, c'est-à-dire dans les cendres et dans la liqueur d'attaque. Ce rendement est excellent lorsque la digestion des cendres est effectuée par la liqueur d'attaque utilisée aux exemples 2C, 2D ou 2E.

### Exemple 3

Des cendres (100g) comprenant notamment 18,1 % en poids de silicium, 8,7 % en poids d'aluminium, 15,7 % en poids de calcium, 2,3 % de fer, 1,5 % en poids de magnésium ont été traitées avec une 1992g d'une solution d'acide phosphorique (20,7% en poids d'ions phosphates) à 60°C pendant 45 minutes. Les cendres contenaient moins de 1% en poids de phosphore (exprimée en % en poids de PO₄). Le milieu réactionnel est filtré par un filtre presse. La phase liquide est purifiée par l'application de 5 résines échangeuses d'ions placées en série (Lewatit^{®} S2568H - Lanxess). Une solution d'acide phosphorique présentant de faibles teneurs en ions métalliques est récupérée après cette purification. Les résines échangeuses d'ions ont été régénérées avec une solution d'acide chlorhydrique à 5% et cinq solutions aqueuses sont récupérées. Le rendement d'extraction en aluminium, calcium, magnésium et fer était respectivement de 95%, 98%, 98% et 81%.

## Revendications

1. Procédé de traitement de cendres issues de l'incinération de déchets, de préférence issues de l'incinération de boues de stations d'épuration, d'os ou de lisier, comprenant les étapes de :
a) digestion des cendres par une liqueur d'attaque contenant des ions phosphates en solution pour former une première phase solide comprenant des impuretés et une première phase liquide comprenant des ions phosphates, ladite liqueur d'attaque contenant des ions phosphates en solution présente un pourcentage massique en ions phosphates compris entre 1 % et 85%,
b) séparation entre ladite première phase liquide comprenant des ions phosphates et ladite première phase solide
**caractérisé en ce que** les cendres comprennent une teneur en phosphore dans les cendres, exprimée en pourcentage en poids de phosphates sous forme PO₄, d'au moins 7 %, et **en ce que** l'étape a) est effectuée pendant une durée comprise entre 5 minutes et 45 minutes et à une température comprise entre 50 et 80° C.

2. Procédé selon la revendication 1 **caractérisé en ce qu'**il comprend en outre une étape c) de purification de ladite première phase liquide comprenant des ions phosphates pour former une seconde phase liquide comprenant des ions phosphates, ladite purification étant effectuée par extraction liquide-liquide ou par application d'un échange d'ions.

3. Procédé selon la revendication 1 ou 2 **caractérisé en ce que** le rapport en poids entre ladite liqueur d'attaque contenant des ions phosphates en solution et les cendres est supérieur ou égale à 2, avantageusement supérieur à 4, de préférence supérieur à 5.

4. Procédé selon l'une quelconque des revendications précédentes **caractérisé en ce que** ladite liqueur d'attaque contenant des ions phosphates en solution présente un pourcentage massique en ions phosphates compris entre 7% et 55%, de préférence entre 7% et 50%, en particulier entre 7% et 40% en poids d'ions phosphates sur base du poids total de la liqueur d'attaque.

5. Procédé selon l'une quelconque des revendications précédentes **caractérisé en ce que** la liqueur d'attaque contenant des ions phosphates en solution est une solution d'acide phosphorique, de préférence une solution comprenant au moins 98,5% en poids d'acide phosphorique.

6. Procédé selon l'une quelconque des revendications précédentes **caractérisé en ce que** la digestion des cendres par la liqueur d'attaque contenant des ions phosphates en solution à l'étape a) est effectuée pendant une durée comprise entre 30 minutes et 45 minutes.

7. Procédé selon l'une quelconque des revendications précédentes **caractérisé en ce que** la digestion des cendres par la liqueur d'attaque contenant des ions phosphates en solution à l'étape a) est effectuée à une température comprise entre 50 et 65 °C.

8. Procédé selon l'une quelconque des revendications précédentes **caractérisé en ce que** les cendres comprennent une teneur en phosphore dans les cendres, exprimée en pourcentage en poids de phosphates sous forme PO₄, d'au moins 7%, de préférence entre 7% et 67,5%,
et de préférence au moins 85% du phosphore présent dans les cendres est digéré à l'étape a) et récupéré dans ladite première phase liquide comprenant des ions phosphates et obtenue à l'étape b), avantageusement au moins 90%, de préférence au moins 95%, en particulier au moins 98%.

9. Procédé selon l'une quelconque des revendications précédentes **caractérisé en ce que** l'étape a) est réalisée dans un réacteur à co-courant comprenant entre 2 et 12 compartiments, de préférence entre 2 et 5 compartiments, en particulier entre 3 et 5 compartiments.

10. Procédé selon l'une quelconque des revendications précédentes 2 à 1 1 **caractérisé en ce que** l'étape c) est effectuée par l'application d'échange d'ions en utilisant une ou plusieurs résines échangeuses d'ions.

11. Procédé selon la revendication précédente **caractérisé en ce que** lesdites une ou plusieurs résines échangeuses d'ions sont régénérées indépendamment les unes des autres par une solution d'acide.

12. Procédé selon la revendication précédente **caractérisé en ce que** l'acide est l'acide chlorhydrique ou l'acide sulfurique ou un mélange de ceux-ci, et une ou plusieurs solutions aqueuses comprenant des sels de chlorure ou des sels de sulfate ou un mélange de celles-ci sont récupérées lors de la régénération desdites résines échangeuses d'ions.

13. Procédé selon l'une quelconque des revendications précédentes **caractérisé en ce que** ladite seconde phase liquide comprenant des ions phosphates obtenue à l'étape c) est une solution d'acide phosphorique.

14. Procédé selon l'une quelconque des revendications précédentes **caractérisé en ce que** une partie de ladite première phase liquide comprenant des ions phosphates ou de ladite seconde phase liquide comprenant des ions phosphates est recyclée pour être utilisée à l'étape a) en tant que liqueur d'attaque contenant des ions phosphates en solution.

15. Procédé selon l'une quelconque des revendications précédentes **caractérisé en ce qu'**il comprend les étapes :
a) la digestion de cendres issues de l'incinération de boues de stations d'épuration, d'os ou de lisier, comprenant une teneur en phosphore, exprimée en pourcentage en poids de P04 dans les cendres, d'au moins 7 % par une première solution d'acide phosphorique pour former une première phase solide comprenant des impuretés et une première phase liquide comprenant des ions phosphates ; le rapport en poids entre ladite première solution d'acide phosphorique et les cendres est supérieur ou égale à 2, avantageusement supérieur à 4, de préférence supérieur à 5 ; de préférence ladite première solution d'acide phosphorique présente un pourcentage massique en ions phosphates compris entre 7% et 55% en poids d'ions phosphates sur base du poids total de la liqueur d'attaque ; la digestion étant effectuée pendant une durée comprise entre 5 minutes et 45 minutes et à une température comprise entre 50 °C et 65 °C ;
b) la séparation de ladite première phase liquide comprenant des ions phosphates de ladite première phase solide,
b') optionnellement traitement de première phase liquide comprenant des ions phosphates par du charbon actif,
c) purification de ladite première phase liquide comprenant des ions phosphates, de préférence, par application d'un échange d'ions ou par extraction liquide-liquide pour obtenir une deuxième solution d'acide phosphorique,
c') optionnellement traitement de ladite solution d'acide phosphorique par du charbon actif.
de préférence l'étape a) est réalisée dans un réacteur à co-courant comprenant entre 2 et 12 compartiments, de préférence entre 2 et 5 compartiments, en particulier entre 3 et 5 compartiments.

## Patentansprüche

1. Verfahren zur Behandlung von Asche aus der Müllverbrennung, vorzugsweise aus der Verbrennung von Klarschlammen, Knochen oder Gülle, die folgenden Schritte umfassend:
a) Aufschluss der Asche durch eine Reaktionsflüssigkeit, die Phosphationen in Losung enthalt, um eine erste feste Phase zu bilden, die Verunreinigungen enthalt, und eine erste flüssige Phase, die Phosphationen enthalt, wobei die Phosphationen in Losung enthaltende Reaktionsflüssigkeit einen Massenanteil an Phosphationen zwischen 1 % und 85 % aufweist,
b) Trennung der ersten flüssigen Phase, die die Phosphationen enthalt, von der ersten festen Phase,
**dadurch gekennzeichnet, dass** die Asche einen Phosphorgehalt in der Asche enthalt, ausgedrückt in Gewichtsprozent von Phosphaten in der Form PO₄ von mindestens 7 %, und dass Schritt a) während einer Zeitdauer zwischen 5 Minuten und 45 Minuten und bei einer Temperatur zwischen 50 und 80°C durchgeführt wird.

2. Verfahren nach Anspruch 1, **dadurch gekennzeichnet, dass** es des Weiteren einen Schritt c) der Reinigung der besagten ersten flüssigen, Phosphationen enthaltenden Phase umfasst, um eine zweite flüssige, Phosphationen enthaltende Phase zu bilden, wobei die Reinigung durch Flüssig-Flüssig-Extraktion oder durch Anwendung von lonenaustausch durchgeführt wird.

3. Verfahren nach Anspruch 1 oder 2, **dadurch gekennzeichnet, dass** das Gewichtsverhaltnis zwischen der, Phosphationen in Losung enthaltender Reaktionsflüssigkeit und der Asche grër?,er oder gleich 2 ist, vorteilhafterweise grër?,er ais 4, vorzugsweise grër?,er ais 5.

4. Verfahren nach einem der vorangehenden Ansprüche, **dadurch gekennzeichnet, dass** die Phosphationen in Losung enthaltende Reaktionsflüssigkeit einen Massenanteil an Phosphationen zwischen 7 Gew.-% und 55 Gew.-% aufweist, vorzugsweise zwischen 7 Gew.-% und 50 Gew.-%, insbesondere zwischen 7 Gew.-% und 40 Gew.-% von Phosphationen bezogen auf das Gesamtgewicht der Reaktionsflüssigkeit.

5. Verfahren nach einem der vorangehenden Ansprüche, **dadurch gekennzeichnet, dass** die Phosphationen in Losung enthaltende Reaktionsflüssigkeit eine Phosphorsaurelosung ist, vorzugsweise eine Losung, die mindestens 98,5 Gew.-% Phosphorsaure enthalt.

6. Verfahren nach einem der vorangehenden Ansprüche, **dadurch gekennzeichnet, dass** der Aufschluss der Asche durch die Phosphationen in Losung enthaltende Reaktionsflüssigkeit in Schritt a) wahrend einer Zeitdauer zwischen 30 Minuten und 45 Minuten durchgeführt wird.

7. Verfahren nach einem der vorangehenden Ansprüche, **dadurch gekennzeichnet, dass** der Aufschluss der Asche durch die Phosphationen in Losung enthaltende Reaktionsflüssigkeit in Schritt a) bei einer Temperatur zwischen 50 und 80 °C, vorzugsweise zwischen 50 und 65 °C durchgeführt wird.

8. Verfahren nach einem der vorangehenden Ansprüche, **dadurch gekennzeichnet, dass** die Asche einen Phosphorgehalt in der Asche enthalt, ausgedrückt in Gewichtsprozent von Phosphaten in der Form PO₄ von mindestens 7 %, vorzugsweise zwischen 7 % und 67,5 %,
und dass vorzugsweise mindestens 85 % des in der Asche vorliegenden Phosphors in Schritt a) aufgeschlossen und in der ersten flüssigen, Phosphationen enthaltenden Phase zurückgewonnen wird, und dass in Schritt b) vorteilhafterweise mindestens 90 %, vorzugsweise mindestens 95 %, insbesondere mindestens 98 % erhalten wird.

9. Verfahren nach einem der vorangehenden Ansprüche, **dadurch gekennzeichnet, dass** Schritt a) in einem Gleichstromreaktor, der zwischen 2 und 12 Kammern, vorzugsweise zwischen 2 und 5 Kammern, insbesondere zwischen 3 und 5 Kammern, umfasst, durchgeführt wird.

10. Verfahren nach einem der vorangehenden Ansprüche 2 bis 9, **dadurch gekennzeichnet, dass** Schritt c) durch Anwendung von lonenaustausch unter Verwendung von einem oder mehreren lonenaustauschharzen durchgeführt wird.

11. Verfahren nach dem vorangehendem Anspruch, **dadurch gekennzeichnet, dass** das eine oder die mehreren lonenaustauschharze unabhängig voneinander durch eine Saurelosung regeneriert werden.

12. Verfahren nach dem vorangehendem Anspruch, **dadurch gekennzeichnet, dass** es sich bei der Saure um Salzsaure oder Schwefelsaure oder um ein Gemisch der beiden handelt, und dass eine oder mehrere wässrige Losungen, die Chlorsalze oder Schwefelsalze oder ein Gemisch der beiden enthalten, bei der Regeneration der lonenaustauschharze zurückgewonnen werden.

13. Verfahren nach einem der vorangehenden Ansprüche, **dadurch gekennzeichnet, dass** die zweite flüssige Phase, die in Schritt c) erhaltene Phosphationen enthalt, eine Phosphorsaurelosung ist.

14. Verfahren nach einem der vorangehenden Ansprüche, **dadurch gekennzeichnet, dass** ein Teil der ersten, Phosphationen enthaltenden flüssigen Phase oder der zweiten, Phosphationen enthaltenden flüssigen Phase rezykliert wird, um in Schritt a) ais Reaktionsflüssigkeit verwendet zu werden, die Phosphationen in Losung enthalt.

15. Verfahren nach einem der vorangehenden Ansprüche, **dadurch gekennzeichnet, dass** es folgende Schritte umfasst:
a) Aufschluss von Asche aus der Verbrennung von Klarschlammen, Knochen oder Gülle, die einen Phosphorgehalt von mindestens 7 %, ausgedrückt in Gewichtsprozent von PO4 in der Asche, aufweist, durch eine erste Phosphorsaurelosung, um eine erste feste Phase zu bilden, die Verunreinigungen enthalt, und eine erste flüssige Phase, die Phosphationen enthalt; das Gewichtsverhaltnis zwischen der ersten Phosphorsaurelosung und der Asche ist grër?,er oder gleich 2, vorteilhafterweise grër?,er ais 4, vorzugsweise grër?,er ais 5; wobei diese erste Phosphorsaurelosung vorzugsweise einen Massenanteil an Phosphationen zwischen 7 Gew.-% und 55 Gew.-% an Phosphationen bezogen auf das Gesamtgewicht der Reaktionsflüssigkeit aufweist; wobei der Aufschluss wahrend einer Zeitdauer zwischen 5 Minuten und 45 Minuten und bei einer Temperatur zwischen 50 °C und 65 °C durchgeführt wird:
b) Trennung der ersten, Phosphationen enthaltenden flüssigen Phase von der ersten festen Phase,
b') optional Behandlung der ersten, Phosphationen enthaltenden flüssigen Phase mit Aktivkohle,
c) Reinigung der ersten, Phosphationen enthaltenden flüssigen Phase vorzugsweise durch Anwendung von lonenaustausch oder durch Flüssig-Flüssig-Extraktion, um eine zweite Phosphorsaurelosung zu erhalten,
c') optional Behandlung der Phosphorsaurelosung mit Aktivkohle.
Schritt a) wird vorzugsweise in einem Gleichstromreaktor, zwischen 2 und 12 Kammern, vorzugsweise zwischen 2 und 5 Kammern, insbesondere zwischen 3 und 5 Kammern umfasst, durchgeführt.

## Claims

1. Method for treating ash originating from waste incineration, in particular from the incineration of sewage sludge, bone or liquid manure, comprising the steps of:
a) digesting ash by a leaching liquor containing phosphate ions in solution, in order to form a first solid phase comprising impurities and a first liquid phase comprising phosphate ions, said leaching liquor containing phosphate ions in solution having a weight percentage of phosphate ions of between 1% and 85%,
b) separating said first liquid phase comprising phosphate ions from said first solid phase,
**characterised in that** the ash has a phosphorus content in the ash, expressed in weight percentage of phosphates in the form of PO4, of at least 7%, and **in that** step a) is executed for a duration of between 5 minutes and 45 minutes and at a temperature comprised between 50 and 80°C.

2. Method according to claim 1, **characterised in that** said method further comprises a step c) of purifying said first liquid phase comprising phosphate ions, in order to form a second liquid phase comprising phosphate ions, said purification being executed by liquid-liquid extraction or by the application of ion exchange.

3. Method according to either claim 1 or claim 2, **characterised in that** the weight ratio of said leaching liquor containing phosphate ions in solution to the ash is greater or equal to 2, advantageously greater than 4, preferably greater than 5.

4. Method according to any of the preceding claims, **characterised in that** said leaching liquor containing phosphate ions in solution has a weight percentage of phosphate ions of between 7% and 55%, preferably between 7% and 50%, in particular between 7% and 40% by weight of phosphate ions, based on the total weight of the leaching liquor.

5. Method according to any of the preceding claims, **characterised in that** the leaching liquor containing phosphate ions in solution is a phosphoric acid solution, preferably a solution comprising at least 98.5% by weight of phosphoric acid.

6. Method according to any of the preceding claims, **characterised in that** the ash is digested in step a) by the leaching liquor containing phosphate ions in solution for a duration of between 30 minutes and 45 minutes.

7. Method according to any of the preceding claims, **characterised in that** the ash is digested in step a) by the leaching liquor containing phosphate ions in solution at a temperature of between 50 and 80°C, preferably between 50 and 65°C.

8. Method according to any of the preceding claims, **characterised in that** the ash has a phosphorus content in the ash, expressed in weight percentage of phosphates in the form of PO₄, of at least 7%, preferably of between 7% and 67.5%,
and preferably at least 85% of the phosphorus present in the ash is digested in step a) and recovered in the said first liquid phase comprising phosphate ions and obtained in step b), advantageously at least 90%, preferably at least 95%, in particular at least 98%.

9. Method according to any of the preceding claims, **characterised in that** step a) is executed in a co-current reactor comprising between 2 and 12 compartments, preferably between 2 and 5 compartments, in particular between 3 and 5 compartments.

10. Method according to any of the preceding claims 2 to 9, **characterised in that** step c) is executed by the application of ion exchange, using one or more ion-exchange resins.

11. Method according to the preceding claim, **characterised in that** said one or more ion-exchange resins are regenerated independently of each other by means of an acid solution.

12. Method according to the preceding claim, **characterised in that** the acid is hydrochloric acid or sulphuric acid or a mixture thereof, and one or more aqueous solutions comprising chloride salts or sulphate salts or a mixture thereof are recovered during the regeneration of said ion-exchange resins.

13. Method according to any of the preceding claims, **characterised in that** said second liquid phase comprising phosphate ions obtained in step c) is a phosphoric acid solution.

14. Method according to any of the preceding claims, **characterised in that** a part of said first liquid phase comprising phosphate ions or of said second liquid phase comprising phosphate ions is recycled for use in step a) as a leaching liquor containing phosphate ions in solution.

15. Method according to any of the preceding claims, **characterised in that** said method comprises the steps of:
a) digesting ash originating from the incineration of sewage sludge, bones or liquid manure, having a phosphorus content, expressed in percentage by weight of PO4 in the ash, of at least 7%, by a first phosphoric acid solution, in order to form a first solid phase comprising impurities and a first liquid phase comprising phosphate ions, the weight ratio of the said first phosphoric acid solution to the ash being greater than or equal to 2, advantageously greater than 4, preferably greater than 5, said first phosphoric acid solution preferably having a weight percentage in phosphate ions of between 7% and 55% by weight of phosphate ions, based on the total weight of the leaching liquor, the digestion being executed for a duration of between 5 minutes and 45 minutes and at a temperature of between 50°C and 65°C;
b) separating said first liquid phase comprising phosphate ions from said first solid phase,
b') optionally, treating the first liquid phase comprising phosphate ions using activated carbon,
c) purifying said first liquid phase comprising phosphate ions, preferably by the application of ion exchange or by liquid-liquid extraction, in order to obtain a second phosphoric acid solution,
c') optionally, treating said phosphoric acid solution using activated carbon,
step a) preferably being executed in a co-current reactor comprising between 2 and 12 compartments, preferably between 2 and 5 compartments, in particular between 3 and 5 compartments.
